# EUROPÄISCHE PATENTSCHRIFT

(11) **EP 0 688 504 B1**
(45) Veröffentlichungstag und Bekanntmachung des Hinweises auf die Patenterteilung: **04.10.2000**
(21) Anmeldenummer: 95109827.6
(22) Anmeldetag: 23.06.1995
(51) Int. Cl.: A23C 21/02, A21D 8/04

(54) **Verfahren zur Herstellung eines Molkenerzeugnisses und dessen Verwendung**
Process for preparing a whey product and its use
Procédé de préparation d'un produit de lactosérum et son utilisation

(30) Priorität: 23.06.1994 DE 4422024
(43) Veröffentlichungstag der Anmeldung: 27.12.1995
(73) Patentinhaber: Kurhessische Molkereizentrale AG, 34123 Kassel (DE)
(72) Erfinder: Klinger, Heinz, D-34292 Ahnatal (DE)
(74) Vertreter: Bunke, Holger, Dr.rer.nat. Dipl.-Chem.

(56) Entgegenhaltungen:
- DE-A- 2 208 136
- DE-A- 2 319 457
- DE-A- 3 910 626
- DE-C- 96 223
- DE-C- 646 669
- DE-C- 805 730
- FR-A- 885 397
- US-A- 5 108 766
- J. KURMANN ET AL. 'Encyclopedia of fermented fresh milk products' 1992 , VAN NOSTRAND REINHOLD , NEW YORK * Seite 180 - Seite 182 *

## Beschreibung

Die Erfindung betrifft ein Verfahren zur Herstellung eines Kwass-ähnlichen Molkenerzeugnisses, bei dem zentrifugierte Molke mit kohlenhydrathaltigen Zusätzen einem Gärprozeß unterworfen wird, sowie die Verwendung des so hergestellten Molkenerzeugnisses als Getränk und bei der Brotherstellung.

Kwass ist ein traditionelles russisches Erfrischungsgetränk mit geringem Alkoholgehalt (ca. 0,5 Vol.-%), das aus einer Maische gewonnen wird, die aus in heißem Wasser eingeweichtem dunklem Roggenbrot und Zusätzen wie Rosinen, Zucker, Pfefferminzblätter besteht. Kwass wird aus Tankwagen becherweise auf der Straße verkauft; seine Abfüllung in Flaschen ist noch ungebräuchlich (vgl. Dr. Oetker, Lexikon Lebensmittel und Ernährung, Ceres-Verlag Bielefeld, 1977).

In den Ländern der früheren Sowjetunion ist auch Milchkwass bekannt, der aus Molke unter Zusatz von Aromastoffen und Hefekulturen hergestellt wird. Dabei wird die Molke zunächst filtriert und zentrifugiert, dann auf 95 bis 97°C erhitzt und noch 1 bis 2 Stunden heiß gehalten. Nach der Kühlung auf 25 bis 30°C wird nochmals filtriert, dann mit Zucker versetzt und mit einer Milchhefenkultur beimpft und 12 bis 15 Stunden lang inkubiert. Schließlich wird noch zur Färbung gebrannter Zucker zugesetzt.

Sogenannter "Neuer Kwass" wird aus geklärter pasteurisierter Molke unter Zusatz von Brotextrakt und Bäckerhefe hergestellt (vgl. H. J. Klupsch, Saure Milcherzeugnisse, Milchmischgetränke und Desserts, Verlag Th. Mann, Gelsenkirchen 1984, Seite 157).

Bei den bisher bekannten Verfahren zur Herstellung von Milchkwass entstehen bei den komplexen Gärprozessen unterschiedliche Säuren, hauptsächlich Milchsäure und Essigsäure, die dem jeweiligen Erzeugnis ihre charakteristische Geschmacksrichtung verleihen. Da viele Menschen jedoch an Übersäuerung des Gastro-Intestinal-Trakts leiden, aber auch aus ernährungsphysiologischen Gründen, wäre es erwünscht, die Essigsäureproduktion bei der Gärung soweit wie möglich zu unterdrücken und den Anteil an Milchsäure, insbesondere an rechtsdrehender L(+)-Milchsäure, im Gesamtsäureanteil des Molkenerzeugnisses zu erhöhen.

DE-A-22 08 136 beschreibt Milchprodukte mit einem erhöhten Gehalt an L(+)-Milchsäure, die zur Herstellung von Getränken oder als Speisenzusatz verwendet werden. Die Herstellung erfolgt durch Vergärung von Milch- und Pflanzenbestandteilen mit Milchsäure produzierenden Bakterien.

Der Erfindung liegt deshalb die Aufgabe zugrunde, ein Verfahren der eingangs genannten Gattung zu schaffen, bei dem der Anteil an L(+)-Milchsäure gezielt auf mindestens 90 % des Gesamtsäureanteils im Endprodukt gesteigert werden kann.

Diese Aufgabe wird erfindungsgemäß bei dem Verfahren der eingangs genannten Gattung dadurch gelöst, daß die Molke unmittelbar nach dem Zentrifugieren auf eine Temperatur zwischen 17 und 20°C gekühlt, mit zerkleinertem Brot, Sauerteig und Haselnüssen unter Rühren versetzt und danach so lange inkubiert wird, bis ein pH-Wert von < 4,0 erreicht ist, worauf Grobteile, einschließlich der Haselnüsse, abgetrennt werden.

Dabei hat sich überraschenderweise herausgestellt, daß der Anteil der L(+)-Milchsäure, bezogen auf den Gesamtsäureanteil des fermentierten Enderzeugnisses, dann auf 90 % und mehr gesteigert werden kann, wenn die Molke unmittelbar nach dem Zentrifugieren nicht erhitzt, sondern auf eine Temperatur zwischen 17 und 21°C, vorzugsweise auf 20 ± 0,5°C, abgekühlt und dann zum Zwecke der Fermentation mit zerkleinertem Brot, Sauerteig und Haselnüssen versetzt und so lange inkubiert wird, bis der pH-Wert niedriger als 4,0 ist.

Vorzugsweise wird als Molke Sauermolke verwendet, und die Inkubationszeit beträgt vorzugsweise mindestens 24 Stunden.

Der Anteil an rechtsdrehender Milchsäure kann noch erhöht werden, wenn besonders darauf geachtet wird, daß die Temperatur des Ansatzes auch während der Fermentation bzw. Inkubation nicht über 20°C ansteigt, was dadurch erreicht werden kann, daß die Fermentation in einem thermostatisierten Reaktor durchgeführt wird, der bei Bedarf gekühlt werden kann.

Vorzugsweise wird das Molkenerzeugnis anschließend erhitzt und unter aseptischen Bedingungen heiß abgefüllt, wobei die Abfüllung besonders bevorzugt bei mindestens 70°C erfolgt. Das Erhitzen kann mittels eines üblichen Plattenapparates oder mittels einer Ultrahochtemperatur (UHT)-Erhitzungsanlage durchgeführt werden.

Da das erfindungsgemäß hergestellte Molkenerzeugnis mit hohem Gehalt an rechtsdrehender Milchsäure und sehr geringem Essigsäuregehalt ernährungsphysiologisch besonders wertvoll und gut verträglich ist, kann es auch zur Unterstützung von Therapien gegen überhöhte Magensäure, Magengeschwüre, Darmträgheit etc. verwendet werden. Es eignet sich deshalb besonders als Molkengetränk, aber auch als Ersatz für Natursauerteig bei der Brotherstellung, d.h. als Backtreibmittel. Gegenstand der Erfindung ist somit auch Brot, das unter Verwendung des erfindungsgemäßen Molkenerzeugnisses hergestellt worden ist, nach einem im übrigen aus der DE-PS 40 36 727 bekannten Verfahren.

### Beispiel

1000 1 Sauermolke werden filtriert und zentrifugiert. Der Überstand wird unmittelbar nach dem Zentrifugieren auf etwa 20°C gekühlt und nacheinander mit 4 kg zerkleinertem Vollkornbrot, 5 kg Sauerteig und 3 kg Haselnüssen unter kräftigem Rühren versetzt. Der homogen durchmischte Ansatz wird anschließend mindestens 24 Stunden lang stehengelassen, bis ein pH-Wert von weniger als 4,0 erreicht ist. Danach werden die Grobteile, einschließlich der Haselnüsse, über ein Sieb entfernt, die Molke erhitzt und bei einer Temperatur von mindestens 70°C unter aseptischen Bedingungen in Flaschen abgefüllt.

## Patentansprüche

1. Verfahren zur Herstellung eines Molkenerzeugnisses, bei dem zentrifugierte Molke mit kohlenhydrathaltigen Zusätzen einem Gärprozeß unterworfen wird, dadurch gekennzeichnet, daß die Molke unmittelbar nach dem Zentrifugieren auf eine Temperatur zwischen 17 und etwa 21°C gekühlt, mit zerkleinertem Brot, Sauerteig und Haselnüssen unter Rühren versetzt und danach so lange inkubiert wird, bis ein pH-Wert von < 4,0 erreicht ist, worauf Grobteile, einschließlich der Haselnüsse, abgetrennt werden.

2. Verfahren nach Anspruch 1, dadurch gekennzeichnet, daß als Molke Sauermolke verwendet wird.

3. Verfahren nach Anspruch 1 oder 2, dadurch gekennzeichnet, daß die Molke nach dem Zentrifugieren auf 20 ± 0,5°C gekühlt wird.

4. Verfahren nach einem der Ansprüche 1 bis 3, dadurch gekennzeichnet, daß die Inkubationszeit mindestens 24 Stunden beträgt.

5. Verfahren nach einem der Ansprüche 1 bis 4, dadurch gekennzeichnet, daß die Temperatur des Ansatzes während der Inkubation auf höchstens 20°C gehalten wird.

6. Verfahren nach einem der Ansprüche 1 bis 5, dadurch gekennzeichnet, daß das Molkenerzeugnis anschließend erhitzt und unter aseptischen Bedingungen heiß abgefüllt wird.

7. Verfahren nach Anspruch 6, dadurch gekennzeichnet, daß das Molkenerzeugnis bei mindestens 70°C abgefüllt wird.

8. Molkengetränk, herstellbar gemäß einem der Ansprüche 1 bis 7.

9. Verwendung des Molkenerzeugnisses herstellbar gemäß einem der Ansprüche 1 bis 7 als Ersatz für Natursauerteig bei der Brotherstellung.

10. Brot, herstellbar unter Verwendung des Molkenerzeugnisses herstellbar gemäß einem der Ansprüche 1 bis 7.

## Claims

1. A method of producing a whey product wherein centrifugated whey, together with carbohydrate-containing additives, is subjected to a fermentation process,
characterized in that said whey, immediately after centrifugation, is cooled to a temperature of between 17°C and about 21°C, that comminuted bread, sour dough and hazelnuts are added thereto with stirring, and in that thereafter one incubates until a pH of < 4.0 is reached whereafter coarse parts, inclusive of said hazelnuts, are separated off.

2. The method of claim 1, characterized in that sour whey is used as said whey.

3. The method of claim 1 or claim 2, characterized in that said whey is cooled, after centrifugation, to 20 ± 0.5°C.

4. The method of any one of claims 1 to 3, characterized in that the period of incubation is at least 24 hours.

5. The method of any one of claims 1 to 4, characterized in that the temperature of the batch during incubation is maintained at no more than 20°C.

6. The method of any one of claims 1 to 5, characterized in that said whey product subsequently is heated and hot-bottled under aseptic conditions.

7. The method of claim 6, characterized in that said whey product is bottled at at least 70°C.

8. Whey drink produceable according to any one of claims 1 to 7.

9. Use of the whey product produceable according to any one of claims 1 to 7 as a substitute for natural sour dough within bread production.

10. Bread produceable by using the whey product produceable according to any one of claims 1 to 7.

## Revendications

1. Procédé de fabrication d'un produit à base de petit lait, lors duquel du petit lait centrifugé est soumis avec des additifs contenant des glucides à un processus de fermentation, caractérisé en ce que ledit petit lait est immédiatement refroidi après centrifugation à une température comprise entre 17°C et environ 21°C, mélangé sous agitation avec de menus morceaux de pain, du levain et des noisettes et ensuite incubé le temps nécessaire jusqu'à ce qu'un pH inférieur à 4,0 soit atteint, après quoi des parties grossières, y compris lesdites noisettes, sont séparées.

2. Procédé selon la revendication 1, caractérisé en ce que le petit lait utilisé est du petit lait acide.

3. Procédé selon la revendication 1 ou 2, caractérisé en ce qu'après la centrifugation le petit lait est refroidi à une température de 20 ± 0,5°C.

4. Procédé selon l'une des revendications 1 à 3, caractérisé en ce que le temps d'incubation est d'au moins 24 heures.

5. Procédé selon l'une des revendications 1 à 4, caractérisé en ce que la température de la préparation pendant l'incubation est maintenue à au plus 20°C.

6. Procédé selon l'une des revendications 1 à 5, caractérisé en ce que le produit à base de petit lait est ensuite chauffé et embouteillé à chaud sous conditions aseptiques.

7. Procédé selon la revendication 6, caractérisé en ce que le produit à base de petit lait est embouteillé à une température d'au moins 70°C.

8. Boisson à base de petit lait pouvant être fabriquée selon l'une des revendications 1 à 7.

9. Utilisation du produit à base de petit lait pouvant être fabriqué selon l'une des revendications 1 à 7 en tant que succédané de levain naturel lors de la fabrication du pain.

10. Pain pouvant être fabriqué en utilisant le produit à base de petit lait pouvant être fabriqué selon l'une des revendications 1 à 7.
